# FASCICULE DE BREVET EUROPEEN

(11) **EP 2 647 013 B1**
(45) Date de publication et mention de la délivrance du brevet: **23.11.2016**
(21) Numéro de dépôt: 11788176.3
(22) Date de dépôt: 28.11.2011
(51) Int. Cl.: H01B 1/12, B01J 39/20, C08J 5/22

(54) **PROCEDE DE PREPARATION DE PARTICULES INORGANIQUES CONDUCTRICES DE PROTONS**
VERFAHREN ZUR HERSTELLUNG PROTONENLEITENDER ANORGANISCHER PARTIKEL
METHOD FOR PREPARING PROTON CONDUCTING INORGANIC PARTICLES

(30) Priorité: 30.11.2010 FR 1059945
(43) Date de publication de la demande: 09.10.2013
(73) Titulaire: Commissariat à l'Énergie Atomique et aux Énergies Alternatives, 75015 Paris (FR)
(72) Inventeur: BIGARRE, Jannick, F-37000 Tours (FR); PERRIN, Renaud, 60200 Compiègne (FR); BUVAT, Pierrick, F-37250 Montbazon (FR); GALIANO, Hervé, F-37700 La Ville Aux Dames (FR)
(74) Mandataire: Ilgart, Jean-Christophe
(86) Numéro de dépôt international: PCT/EP2011/071164
(87) Numéro de publication internationale: WO 2012/072572

(56) Documents cités:
- WO-A1-2006/090862
- FR-A1- 2 869 032

## Description

### DOMAINE TECHNIQUE

La présente invention se rapporte à un procédé de préparation de particules conductrices de protons par fonctionnalisation desdites particules avec des composés organiques porteurs d'au moins un groupe échangeur de protons.

La présente invention se rapporte également aux particules obtenues par ce procédé.

Ces particules ont pour caractéristique de présenter une capacité d'échange ionique particulièrement élevée.

De ce fait, ces particules trouvent leur application dans l'élaboration de matériaux conducteurs protoniques, en particulier de matériaux destinés à entrer dans la constitution de membranes conductrices de protons pour piles à combustible, tels que les piles fonctionnant à H₂/air ou à H₂/O₂ (connues sous l'abréviation PEMFC signifiant « Proton Exchange Membrane Fuel Cell ») ou fonctionnant au méthanol/air (connues sous l'abréviation DMFC signifiant « Direct Methanol Fuel Cell »).

Ainsi, le domaine technique de l'invention peut être défini, de manière générale, comme celui des particules conductrices de protons et des matériaux les contenant.

Plus précisément, l'invention se situe dans le domaine des particules conductrices de protons utilisées dans la constitution de membranes pour piles à combustible fonctionnant à basses températures.

### ETAT DE LA TECHNIQUE ANTÉRIEURE

Une pile à combustible est un générateur électrochimique, qui convertit l'énergie chimique d'une réaction d'oxydation d'un combustible en présence d'un comburant en énergie électrique.

Généralement, une pile à combustible comporte une pluralité de cellules électrochimiques montées en série, chaque cellule comprenant deux électrodes de polarité opposée séparées par une membrane échangeuse de protons faisant office d'électrolyte solide.

La membrane assure le passage vers la cathode des protons formés lors de l'oxydation du combustible à l'anode.

Les membranes structurent le coeur de la pile et doivent, par conséquent, présenter de bonnes performances en matière de conduction protonique, ainsi qu'une faible perméabilité aux gaz réactants (H₂/air ou H₂/O₂ pour les piles PEMFC et méthanol/air pour les piles DMFC). Les propriétés des matériaux constituant les membranes sont essentiellement la stabilité thermique, la résistance à l'hydrolyse et à l'oxydation ainsi qu'une certaine flexibilité mécanique.

Des membranes utilisées couramment et remplissant ces exigences sont des membranes obtenues à partir de polymères constitués d'une chaîne principale linéaire perfluorée et de chaînes latérales portant des groupes acide sulfonique. Parmi les plus connues, on peut citer les membranes commercialisées sous la dénomination NAFION® par la société Dupont de Nemours ou sous la dénomination DOW®, FLEMION® ou Aciplex par les sociétés Dow Chemicals et Asahi Glass. Ces membranes présentent de bonnes performances électrochimiques et une durée de vie intéressante mais néanmoins insuffisante pour les applications PEMFC. De plus, leur coût (plus de 500 euros/m²) reste prohibitif pour la commercialisation. Pour les applications DMFC, elles présentent une perméabilité au méthanol élevée, ce qui limite également leur utilisation avec ce type de combustible. Enfin, ces membranes présentent une importante sensibilité à des températures supérieures à 80°C, ce qui les exclut d'une utilisation dans des piles fonctionnant à des températures élevées, à savoir entre 80°C et 150°C.

Par ailleurs, il est connu que l'efficacité conductrice d'une membrane protonique est fortement liée à la présence d'eau et donc à la capacité de rétention d'eau de la membrane. Or à des températures proches de 100°C, et plus encore au-delà, l'eau est rapidement évacuée de la membrane, provoquant ainsi la chute de la conductivité et augmentant la perméabilité au combustible. A ces températures, cette diminution des performances peut s'accompagner d'une dégradation de la membrane. Pour résoudre les problèmes de dessèchement des membranes dans les piles à combustibles à haute température, à savoir au moins égale à 100°C, le maintien d'une humidité relative maximale de l'ordre de 80% à 100% est requise mais difficilement réalisable par une source externe d'hydratation.

Afin d'augmenter la rétention d'eau dans les membranes de piles à combustible à haute température, certains auteurs se sont orientés vers le développement de membranes plus complexes comprenant, en plus d'une matrice en polymère organique conducteur, des particules minérales. Ces membranes sont désignées notamment par la terminologie « membranes hybrides inorganiques-organiques ».

Les premières membranes hydrides ont été développées dès la fin des années 90.

Ainsi, Malhotr et al, dans J.Electrochem.Soc.,1997, 144 [1] décrivent des membranes résistantes à des températures allant jusqu'à 110°C, comprenant un polymère du type Nafion® imprégné avec une solution dopante d'hétéropolyacides minéraux.

Le document WO 2006/090862 A1 divulgue des particules de silice fonctionnalisées par un polymère styrénique portant des groupes échangeurs de protons, en particulier des sulfonates. Un matériau composite conducteur de protons y est également décrit.

D'autres membranes hybrides à base de polymères non sulfonés, comme les polybenzimidazoles (Staiti et al., J.Power Sources, 2000, 90, 231 [2]), les polyaryléthersulfones (Baradie et al., Macromol.Symp., 1999, 138, 85 [3]), les copolymères styrène/éthylène/butène/styrène (Hirate et al., J.Sol-Gel Sci. And Techn., 2000, 17, 61 [4]) incorporant chacun des hétéropolyacides conducteurs de type tungstophosphorique ont également été étudiés.

Toutefois, ces membranes hybrides ont pour inconvénient de nécessiter un taux de charge en hétéropolyacides pouvant atteindre 70% pour se rapprocher des performances des membranes Nafion®.

Afin de contourner les inconvénients liés à l'utilisation de particules du type hétéropolyacides décrits ci-dessus, certains auteurs ont remplacé ce type de particules par des particules d'argile.

Les particules d'argile, lorsqu'elles sont incorporées dans des membranes à base de polymère organique conducteur, se révèlent particulièrement intéressantes pour les raisons suivantes :
- elles confèrent aux membranes d'excellentes propriétés de rétention d'eau ;
- elles se révèlent particulièrement stables à de hautes températures ;
- elles présentent de bonnes propriétés de percolation pour des taux de charge faibles.

Toutefois, les auteurs, qui ont développé ces membranes chargées avec des particules d'argile, ont constaté que l'apport de particules d'argile n'améliorait pas de manière significative la conductivité protonique de la membrane.

Les auteurs de la présente invention se sont ainsi fixé pour objectif de proposer un procédé de préparation de particules inorganiques fonctionnalisées par des composés organiques porteurs d'au moins un groupe échangeur de protons, qui présentent les avantages suivants :
*la possibilité de moduler la capacité d'échange ionique desdites particules ;
*la possibilité également d'accéder à des particules présentant une capacité d'échange ionique élevée (pouvant être supérieure à 5 méq/g) ;

### EXPOSÉ DE L'INVENTION

Ainsi, l'invention a trait, selon un premier objet, à un procédé de fonctionnalisation de particules inorganiques par des polymères comprenant au moins un motif répétitif porteur d'au moins un groupe échangeur de protons comprenant les étapes suivantes :
a) une étape de fonctionnalisation de particules inorganiques par un agent de terminaison de polymérisation anionique comprenant au moins un groupe apte à se lier à la surface desdites particules ;
b) une étape de polymérisation anionique d'au moins un monomère porteur d'au moins un groupe précurseur d'un groupe échangeur de protons ;
c) une étape de mise en contact des particules obtenues à l'étape a) avec les polymères obtenus à l'étape b), moyennant quoi les particules résultantes sont des particules fonctionnalisées par lesdits polymères par réaction entre une extrémité réactive desdits polymères et au moins un groupe de l'agent de terminaison susmentionné ; et
d) une étape de transformation du ou des groupes précurseurs en le ou lesdits groupes échangeurs de protons.

Avant d'entrer plus en détail dans la présente description, nous précisons les définitions suivantes.

Par polymère, on entend, classiquement, au sens de l'invention, un composé constitué par l'enchaînement d'un ou plusieurs motifs répétitifs.

Par motif répétitif, on entend, classiquement, au sens de l'invention, un groupe bivalent (c'est-à-dire un groupe formant pont) issu d'un monomère après polymérisation de celui-ci.

Par agent de terminaison, on entend, classiquement, au sens de l'invention, un composé apte à stopper le processus de propagation de polymérisation (en l'occurrence, ici, une polymérisation anionique) dans une chaîne polymérique, ce qui signifie, en d'autres termes que, grâce à l'un de ses groupes, une extrémité réactive porteuse d'une charge négative du polymère préparé à l'étape b) réagit avec l'agent de terminaison, moyennant quoi, dans le contexte de l'invention, le polymère ainsi préparé à l'étape b) se retrouve greffé à la surface des particules via le reste d'agent de terminaison lié lui-même à la surface des particules (ce reste d'agent de terminaison résultant, à la fois, de la réaction de cet agent de terminaison avec la surface des particules pour se trouver lié à celle-ci et de la réaction de cet agent ainsi lié avec l'extrémité réactive du polymère préparé à l'étape b)).

Ainsi, grâce à la mise en oeuvre du procédé de l'invention, il est ainsi possible d'obtenir des particules inorganiques conductrices de protons avec des propriétés modulables en ce qui concerne la capacité d'échange ionique, en jouant d'une part sur la quantité d'agent de terminaison fonctionnalisant la surface des particules et la quantité de motifs répétitifs porteurs d'au moins un groupe échangeur de protons présentes dans les polymères préparés à l'étape b), lesquels polymères sont ensuite subséquemment greffés, lors de l'étape c), sur les restes d'agent de terminaison fonctionnalisant la surface des particules. En jouant sur ces deux aspects, il est ainsi possible d'accéder à des particules pouvant présenter une capacité d'échange ionique très élevée et pouvant être notamment supérieure à 5 méq.g⁻¹.

Comme mentionné ci-dessus, le procédé de l'invention comprend, en premier lieu, une étape de fonctionnalisation de particules inorganiques par un agent de terminaison de polymérisation anionique comprenant au moins un groupe apte à se lier à la surface desdites particules (étape a), cette étape pouvant consister à mettre en contact ledit agent de terminaison avec lesdites particules.

Lesdites particules inorganiques peuvent être des particules de zéolithes, des particules de phosphates de zirconium, des particules de phosphonates de zirconium, des particules d'argiles, des particules d'oxydes telles que la silice, l'alumine, la zircone, l'oxyde de titane.

En particulier, les particules inorganiques peuvent être des particules d'oxyde, telles que des particules de silice.

Avantageusement, les particules sont des particules hydrophiles comportant à leur surface des groupes hydrophiles, tels que des groupes -OH, ces groupes pouvant participer ensuite à la fixation des agents de terminaisons susmentionnés à la surface desdites particules.

Des particules comprenant des groupes hydrophiles à leur surface, tels que des groupes -OH peuvent être des particules d'oxyde, telles que des particules de silice, ces particules comprenant intrinsèquement de tels groupes dès lors qu'elles sont en contact avec l'humidité de l'air.

Concernant les agents de terminaisons, ceux-ci doivent comporter au moins un groupe apte à réagir avec au moins un groupe présent à la surface des particules pour former une liaison chimique, telle qu'une liaison covalente.

En particulier, lorsque les particules comprennent à leur surface des groupes -OH, les groupes de l'agent de terminaison aptes à se lier à la surface des particules pour former une liaison chimique, telle qu'une liaison covalente, peuvent être choisis parmi les groupes de formules suivantes :
- COOR¹ avec R¹ représentant un atome d'hydrogène, un groupe alkyle comprenant de 1 à 30 atomes de carbone ou un groupe phényle ;
- COCl ;
- COCH₂CO-R¹ avec R¹ représentant un atome d'hydrogène, un groupe alkyle comprenant de 1 à 30 atomes de carbone ou un groupe phényle ;
- PO(OH)₂, -PO(OR²) (OH) ou -PO(OR²)(OR³) avec R² et R³, identiques ou différents, représentant un groupe alkyle comprenant de 1 à 30 atomes de carbone ou un groupe phényle ;
- CO(NHOH) ;
- M(OR⁴)ₙ₋ₓ₋₁Zₓ avec x étant un entier allant de 0 à (n-1), M étant un métal ou un métalloïde, n étant un degré d'oxydation de M, R⁴ représentant un atome d'hydrogène, un groupe alkyle comprenant de 1 à 30 atomes de carbone, un groupe phényle, un cation métallique monovalent, ou un groupe de formule N⁺R¹₄, avec R¹ représentant un atome d'hydrogène, un groupe alkyle comprenant de 1 à 30 atomes de carbone, ou un groupe phényle, et Z représente un atome d'hydrogène, un groupe alkyle comprenant de 1 à 30 atomes de carbone, un groupe phényle ou un atome d'halogène ;
- SO₃M' avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- B(OM')₂ avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- OH ;
et les combinaisons de ceux-ci.

Pour le groupe de formule -M(OR⁴)ₙ₋ₓ₋₁Zₓ telle que définie précédemment, M peut représenter un élément métallique, tel qu'un élément de transition de degré d'oxydation n donné ou un élément métalloïde tel que Si, Ge, Te de degré d'oxydation n donné, les degrés d'oxydation envisageables pour chaque élément métallique ou métalloïde étant connus de l'homme du métier.

A titre d'exemple de groupes conformes à cette définition, on peut citer le groupe de formule
- Si(OR⁴)₃₋ₓZₓ avec x étant un entier allant de 0 à 3, Z et R⁴ ayant les mêmes définitions que celles données ci-dessus.

Plus particulièrement, un groupe approprié peut être un groupe alcoxysilane, tel qu'un groupe triméthoxysilane, un groupe triéthoxysilane.

Les agents de terminaison de polymérisation anionique comprennent, également, au moins un groupe apte à réagir avec l'extrémité anionique du polymère préparé à l'étape b) pour former une liaison covalente avec celle-ci, cette liaison covalente s'établissant entre ledit polymère et le reste d'agent de terminaison lié à la surface de la particule, la formation de la liaison covalente pouvant se faire selon un mécanisme de substitution nucléophile tel qu'illustré par le schéma réactionnel suivant : 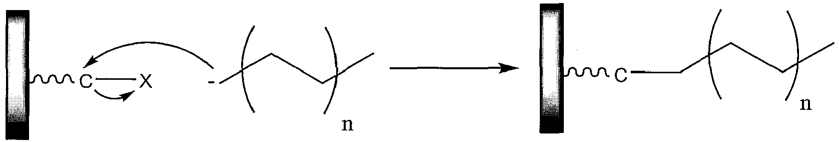 le groupement -C-X lié à la liaison ondulée illustrant schématiquement le reste d'agent de terminaison lié à la surface d'une particule (représentée ici par une barre verticale pleine), le composé porteur d'une charge négative à son extrémité illustrant schématiquement le polymère préparé à l'étape b).

Pour assurer la terminaison d'une polymérisation anionique, les agents de terminaison peut ainsi comprendre un groupement -C-X, X étant un atome et/ou groupe électroattracteur, et en particulier un atome d'halogène.

Des agents de terminaison conformes à l'invention peuvent être des composés comprenant au moins un groupe alcoxysilane (en tant que groupe apte à se greffer à la surface de particules inorganiques, telles que des particules de silice) et au moins un groupement -C-X tel que défini ci-dessus (en tant que groupe apte à assurer la terminaison d'une polymérisation anionique).

Plus particulièrement, des agents de terminaison conformes à l'invention peuvent des composés halogénoalcoxysilanes.

A titre d'exemples de tels composés, on peut citer le chlorométhylphényléthyltriméthoxysilane, le chlorométhylphényléthyltriéthoxysilane, lesquels répondent à la formule générale suivante : 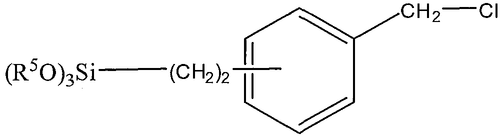 dans laquelle R⁵ est un groupe méthyl (pour le chlorométhylphényléthyltriméthoxysilane) ou un groupe éthyl (pour le chlorométhylphényléthyltriéthoxysilane).

En deuxième lieu, le procédé comprend une étape de polymérisation anionique d'au moins un monomère porteur d'au moins un groupe précurseur d'un groupe échangeur de protons.

Le groupe échangeur de protons peut être un groupe acide sulfonique -SO₃H, un groupe acide carboxylique -CO₂H ou un groupe acide phosphonique -PO₃H₂, ces groupes pouvant être présents éventuellement sous forme de sels.

Le groupe précurseur d'un groupe échangeur de protons est un groupe chimique susceptible d'être transformé par une réaction chimique appropriée en un groupe échangeur de protons.

Dans le cas où les groupes échangeurs de protons sont des groupes acide sulfonique, acide carboxylique ou acide phosphonique, éventuellement sous forme d'un sel, les groupes précurseurs de tels groupes peuvent être avantageusement des groupes esters d'acide carboxylique, esters d'acide sulfonique ou esters d'acide phosphonique.

Une réaction appropriée pour transformer ces groupes précurseurs en groupes échangeurs de protons du type acide carboxylique, acide sulfonique ou acide phosphorique est une réaction d'hydrolyse, par exemple, une hydrolyse en milieu acide.

Avantageusement, le groupe échangeur de protons est un groupe acide phosphonique -PO₃H₂, éventuellement sous forme d'un sel, et le groupe précurseur d'un groupe acide phosphonique est un groupe ester d'acide phosphonique.

Les monomères aptes à être utilisés dans le cadre de l'étape b) peuvent être :
*des monomères éthyléniques porteurs d'un groupe ester d'acide carboxylique ;
*des monomères éthyléniques porteurs d'un groupe ester d'acide sulfonique ; et
*des monomères éthyléniques porteurs d'un groupe ester d'acide phosphonique.

Comme exemples de monomères éthyléniques porteurs d'un groupe ester d'acide carboxylique, on peut citer des monomères de formule suivante : 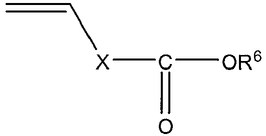 dans laquelle :
- X est une liaison simple ou un groupe benzyle ;
- R⁶ est un groupe alkyle.

Comme exemples de monomères éthyléniques porteurs d'un groupe ester d'acide sulfonique, on peut citer les monomères de formule suivante : 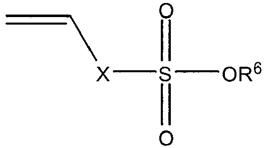 dans laquelle :
- X est une liaison simple ou un groupe benzyle ;
- R⁶ est un groupe alkyle.

Comme exemples de monomères éthyléniques porteurs d'un groupe acide phosphorique et leurs esters correspondants, on peut citer les monomères de formule suivante : 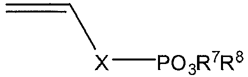 dans laquelle :
*X est une liaison simple ou un groupe benzyle ;
*R⁷ et R⁸ représentent, indépendamment, l'un de l'autre, un groupe alkyle.

Lorsque X est une liaison simple, on peut citer comme exemples spécifiques de monomères le vinylphosphonate de diéthyle (R⁷ et R⁸ représentant alors un groupe éthyle), le vinylphosphonate de diméthyle (R⁷ et R⁸ représentant alors un groupe méthyle), le vinylphosphonate de diisopropyle (R⁷ et R⁸ représentant alors un groupe diisopropyle).

Lorsque X est un groupe benzyle, les monomères correspondent ainsi à la formule suivante : 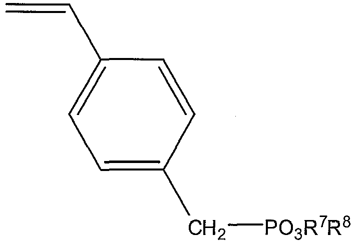 des exemples spécifiques de tels monomères pouvant être le diéthylbenzyl phosphonate (R⁷ et R⁸ représentant alors un groupe éthyle), le diméthylbenzyl phosphonate (R⁷ et R⁸ représentant un groupe méthyle).

Outre les monomères susmentionnés, l'étape de polymérisation peut se dérouler en présence d'autres monomères différents de ceux susmentionnés ci-dessus, ces monomères pouvant être des monomères styréniques ou encore des monomères méthacrylates.

A titre d'exemples de monomères styréniques, on peut citer le styrène en tant que tel, le paraméthylstyrène et les mélanges de ceux-ci.

A titre d'exemples de monomères méthacrylates, on peut citer les méthacrylates d'alkyles, tels que le méthacrylate de tert-butyle, le méthacrylate de méthyle.

L'étape de polymérisation anionique b) est réalisée, classiquement, en présence d'un initiateur de polymérisation, qui est un composé basique, qui peut être choisi parmi les composés alkyllithiens, tels que le butyllithium (symbolisé BuLi).

Une fois l'étape de polymérisation anionique b) réalisée, les particules fonctionnalisées obtenues à l'issue de l'étape a) et les polymères obtenus à l'issue de l'étape b) sont mis en contact lors de l'étape c), moyennant quoi les particules résultantes de cette étape de mise en contact sont des particules fonctionnalisées par ledit polymère par réaction entre une extrémité réactive du polymère et au moins un des groupes dudit agent de terminaison.

Le schéma réactionnel exposé plus haut peut être repris pour expliciter l'étape c) susmentionnée.

Les monomères de l'étape b (et par voie de conséquence les polymères résultants) comportant un groupe précurseur dudit groupe échangeur de protons, le procédé de l'invention comprend une étape de transformation de ces groupes précurseurs en groupes échangeurs de protons (étape d).

Cette étape de transformation consiste à mettre en oeuvre une étape classique de la chimie organique à la portée du l'homme du métier.

A titre d'exemple, lorsque les monomères de l'étape b) (et ainsi les polymères résultants) comportent un groupe précurseur du type ester d'acide carboxylique, d'acide sulfonique ou d'acide phosphonique, l'étape de transformation peut consister en une simple étape d'hydrolyse, par exemple, en milieu acide.

Un procédé spécifique conforme à l'invention est un procédé, dans lequel :
- les particules sont des particules de silice ;
- l'agent de terminaison est un composé halogénoalcoxysilane, tel que le chlorométhylphényléthyltriméthoxysilane ;
- le monomère comportant un groupe précurseur d'un groupe échangeur de protons utilisé dans l'étape b) est le diéthylvinylphosphonate, ce monomère étant utilisé, éventuellement, en combinaison avec au moins un monomère styrénique, tel que le styrène.

Le procédé de l'invention permet d'obtenir des particules se présentant sous forme de particules fonctionnalisées par des chaînes polymériques comportant des motifs répétitifs comprenant des groupes échangeurs de protons, ces chaînes étant liées aux particules via un groupe espaceur, qui est un reste d'agent de terminaison (à savoir le reste de l'agent de terminaison, après que celui-ci ait réagi, d'une part, au moyen d'un de ses groupes, avec un groupe présent à la surface des particules pour fonctionnaliser celles-ci, le reste de l'agent de terminaison pouvant être ainsi lié de façon covalente à la surface de la particule et d'autre part, au moyen d'un autre de ses groupes, avec l'extrémité anionique des chaînes polymériques issues de l'étape b)), moyennant quoi les chaînes polymériques se trouvent liées de façon covalente au reste de l'agent de terminaison.

A titre d'exemple, lorsque les particules sont des particules de silice, l'agent de terminaison est le chlorométhylphényléthyltriméthoxysilane et le monomère comportant un groupe précurseur d'un groupe échangeur de protons utilisé dans l'étape b) est le diéthylvinylphosphonate, les particules résultantes, après hydrolyse des groupes phosphonates en groupes acide phosphonique, sont des particules de silice, auxquelles sont liés, de façon covalente, des restes d'agent de terminaison de formule suivante : 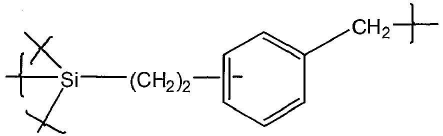 via un atome de silicium (comme illustré sur la formule ci-dessus), ces restes étant liés à des chaînes polymériques comprenant un enchaînement de motifs répétitifs issus de l'acide vinylphosphonique (ces motifs résultant de l'hydrolyse de motifs répétitifs issues de la polymérisation du diéthylvinylphosphonate) via le groupe -CH₂- desdits restes.

Lesdites particules présentent d'excellentes propriétés de conduction protonique, et donc de mobilité ionique.

Ces particules peuvent donc être utilisées pour entrer dans la constitution de matériaux composites conducteurs de protons, lesquels matériaux composites peuvent entrer dans la constitution de membranes échangeuses de protons, en particulier de membranes échangeuses de protons destinées à entrer dans la constitution de cellules de piles à combustible.

Plus spécifiquement, le matériau composite conducteur comprend une matrice polymérique au sein de laquelle sont dispersées les particules telles que définies ci-dessus.

Selon une première alternative, la matrice polymérique peut être une matrice en un polymère non conducteur de protons.

De tels polymères peuvent être des polymères fluorés tels que le polytétrafluoroéthylène (PTFE), le polyfluorure de vinylidène (PVDF), le copolymère tétrafluoroéthylène/éthylène (ETFE) et leurs dérivés. Les polymères fluorés ont notamment pour avantage de présenter une bonne tenue mécanique ainsi qu'une bonne résistance chimique.

De tels polymères peuvent être également des polymères aromatiques ou hétérocycliques. On précise que, par polymères aromatiques ou hétérocycliques, on entend un polymère dont la chaîne principale comprend un enchaînement de motifs aromatiques (par exemple, phénylène) ou hétérocycliques (par exemple, benzimidazole). Parmi ces polymères, on peut citer les polysulfones, les polyaryléthercétones, les polyimides, les polybenzimidazoles, les polyoxydes de phénylène, les polycarbonates. De tels polymères ont pour particularité de conférer au matériau composite, dans lequel ils sont intégrés, une rigidité et une résistance chimique et thermique élevées, sans nécessiter l'incorporation au matériau composite d'apport de renfort ou de charge.

Selon une deuxième alternative, la matrice polymérique peut être une matrice polymérique conductrice de protons.

Une telle matrice peut comprendre des polymères perfluorés sulfonés. On précise que, par polymères perfluorés sulfonés, on entend des polymères comprenant une chaîne principale linéaire perfluorée et des chaînes latérales porteurs de groupements acide sulfonique. De tels polymères sont notamment disponibles dans le commerce sous la marque déposée NAFION® par la société Dupont de Nemours, ou ACIPLEX-S® de la société Asahi Chemical.

Des polymères conducteurs de protons peuvent être également des polymères aromatiques ou hétérocycliques porteurs de fonctions acides choisies parmi -SO₃H, -PO₃H₂ et -CO₂H. De tels polymères peuvent être des polysulfones, des polyaryléthercétones, des polyimides, des polybenzimidazoles, des polyoxydes de phénylène, des polycarbonates.

Le matériau composite selon l'invention se présente avantageusement sous forme d'un film, présentant par exemple une épaisseur de 10 à 300 µm.

Les matériaux composites susmentionnés peuvent être préparés selon deux procédés alternatifs.

Selon une première alternative, le procédé comprend successivement les étapes suivantes :
- mélanger, en l'absence de solvant, un ou plusieurs polymères constitutifs de la matrice avec des particules telles que définies ci-dessus ;
- former à partir du mélange obtenu le matériau composite par voie fondue.

En variante, le procédé peut comprendre successivement les étapes suivantes :
- fondre, en l'absence de solvant, un ou plusieurs polymères constitutifs de la matrice ;
- incorporer, dans le polymère ou le mélange de polymères fondus des particules telles que définies ci-dessus.

Selon la première alternative, le traitement thermique comprend généralement une étape de chauffage du mélange obtenu après la première étape à une température pouvant aller de 100°C à 300°C, de manière à obtenir un mélange fondu et une étape simultanée ou consécutive de mise en forme du mélange, afin d'obtenir le matériau composite voulu, cette mise en forme pouvant consister en un calandrage.

Parmi les traitements thermiques par voie fondue appropriés, on peut citer l'extrusion.

Selon une seconde alternative, le procédé comprend successivement les étapes suivantes :
- une étape de mélange d'une solution comprenant des particules telles que définies précédemment et un ou plusieurs solvants avec un ou plusieurs polymères constitutifs de la matrice ;
- une étape de formation, à partir du mélange obtenu, d'un matériau composite par évaporation du ou des solvant(s).

Selon cette seconde alternative, la solution peut être coulée sur un support, par exemple, en verre, en alumine ou encore en polyéthylène, puis le matériau sous forme de film est formé par évaporation du ou des solvants. A l'issue de ce procédé, on obtient un matériau sous forme de film déposé sur le support. Le film obtenu peut être facilement désolidarisé du support, pour donner un film conducteur protonique auto-supporté.

On précise que les solvants susceptibles d'être utilisés dans le cadre de ce procédé peuvent être choisis parmi les solvants polaires aprotiques tels que le diméthylformamide, le diméthylacétamide, le tétrahydrofurane, le diméthylsulfoxyde, ou encore des solvants chlorés comme le chloroforme, mais aussi des solvants tels que les alcools, les éthers, l'acétone.

Du fait de leurs propriétés mécaniques, ces matériaux peuvent être mis en oeuvre efficacement et conduire à des films minces suffisamment résistants pour être utilisés comme membranes pour pile à combustible.

Ces membranes se présentent avantageusement sous la forme de films minces, ayant, par exemple, une épaisseur de 10 à 300 micromètres.

Ces membranes présentent avantageusement une imperméabilité suffisante aux gaz réactants (tels que H₂ et O₂) et sont stables, de préférence, jusqu'à une température d'au moins 150°C.

De préférence, le matériau composite constitutif de la membrane comprend de 1 à 20% en poids de particules telles que définies précédemment, lorsque la matrice de polymère comprend un ou plusieurs polymères conducteurs de protons.

De préférence, le matériau composite constitutif de la membrane comprend de 5 à 70% en poids de particules telles que définies précédemment, lorsque la matrice polymère comprend un ou plusieurs polymères non conducteurs de protons.

On précise que les % ci-dessus sont exprimés par rapport au poids total du matériau composite.

Plus spécifiquement, la membrane peut être comprise dans un dispositif comprenant au moins un assemblage électrode-membrane-électrode, dans lequel la membrane est telle que définie ci-dessus.

Le dispositif de pile à combustible comprend généralement plusieurs assemblages électrode-membrane-électrode.

Pour préparer un tel assemblage, la membrane peut être placée entre deux électrodes, par exemple en tissu ou en papier de carbone imprégné d'un catalyseur. L'ensemble formé de la membrane disposée entre les deux électrodes est ensuite pressé à une température adéquate afin d'obtenir une bonne adhésion électrode-membrane.

L'assemblage électrode-membrane-électrode est ensuite placé entre deux plaques assurant la conduction électrique et l'alimentation en réactifs aux électrodes. Ces plaques sont communément désignées par le terme de plaques bipolaires.

L'invention va maintenant être décrite à la lumière des exemples donnés ci-dessous donnés à titre illustratif et non limitatif.

### EXPOSÉ DÉTAILLÉ DE MODES DE RÉALISATION PARTICULIERS

### EXEMPLE 1

Cet exemple illustre la préparation de particules de silice fonctionnalisées conformes à l'invention comprenant les étapes suivantes :
- une étape de greffage de particules de silice par du chlorométhylphényléthyltriméthoxysilane (étape a) ;
- une étape de polymérisation anionique du diéthylvinylphosphonate (étape b) ;
- une étape de réaction du polymère obtenu à l'étape b) avec les particules de silice obtenues à l'étape a) (étape c).

Le schéma réactionnel est le suivant :
Etape a 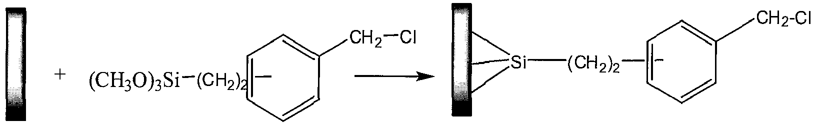
Etape b 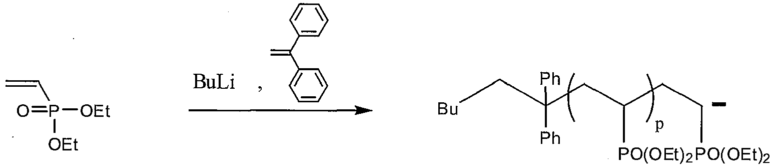
Etape c

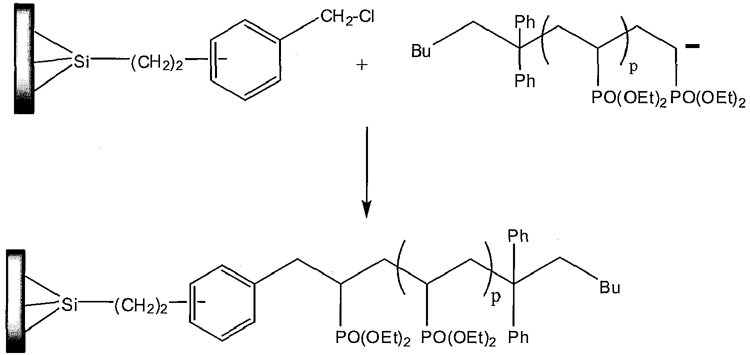

A l'issue de l'étape c, il est procédé à une hydrolyse des groupes -PO(OEt)₂ non représentée sur ce schéma.

Le trait plein vertical représente une particule de silice, le trait plein horizontal représente une charge négative, Bu représente un groupe butyle, Et représente un groupe éthyle, Ph représente un groupe phényle, p représentent le nombre de répétition des motifs pris entre parenthèses.

### Etape a-Greffage de particules de silice par du chlorométhylphényléthyltriméthoxysilane

Une suspension de 4 g de particules de silice d'un diamètre moyen de particules de 7 nm dans 300 mL de toluène est mise à reflux sous agitation magnétique et sous ultrasons pendant 1 heure. Après addition de 6 mL de chlorométhylphényléthyltriméthoxysilane, le mélange est mis à réagir pendant 4 heures à reflux. Les particules ainsi fonctionnalisées sont ensuite isolées et lavées à l'éthanol, afin d'éliminer le chlorométhylphényléthyltriméthoxysilane non greffé ainsi que les produits d'hydrolyse. La poudre obtenue est séchée sous vide à 100°C pendant 24 heures.

Une analyse RMN ¹³C des particules obtenues met en évidence un groupe chlorométhyle à 46 ppm, ce qui atteste de la présence de ce groupe sur lesdites particules, ce groupe constituant un groupe de terminaison pour une polymérisation anionique.

Une solution S1 de 500 mg de poudre ainsi préparée dispersée dans 50 mL de tétrahydrofurane (THF) est préparée. Cette solution est dégazée par 7 cycles vide/argon et maintenue sous atmosphère inerte d'argon.

### Etape b-Polymérisation anionique du diéthylvinylphosphonate

Dans un réacteur de 250 mL, équipé d'une entrée gaz/vide, d'un thermomètre et d'un septum, préalablement séché à au moins 100°C pendant 24 heures, sont introduits 100 mL de tétrahydrofurane (THF) anhydre. La solution est mise sous agitation magnétique, refroidie à -78°C puis maintenue à cette température. Le système est dégazé par au moins 7 cycles vide/argon. Le système est maintenu sous un très léger balayage d'argon. On introduit 0,15 mmol de diphényléthylène (symbolisé DPE) puis du n-butyllithium (BuLi) jusqu'à l'obtention d'un couleur rouge-orange et on finalise par un ajout de 0,15 mmol de BuLi. Le diphényléthylène consiste en un co-amorceur formant un anion stable et encombré, ce co-amorceur n'homopolymérisant pas.

Après 15 minutes, on introduit dans le mélange réactionnel 12,5 mmol (2,05 g) de diéthylvinylphosphonate (symbolisé DEVP) de manière lente de sorte à conserver la température constante. La coloration disparaît au profit d'une légère coloration jaune. Le mélange réactionnel est conservé sous agitation à -70°C pendant 1H30.

### Etape c-Réaction entre le polymère préparé à l'étape b) et les particules préparées à l'étape a)

La solution S1 préparée à l'étape a) est injectée dans le réacteur contenant le milieu réactionnel de l'étape b) via une canule. On agite l'ensemble sous agitation pendant 12 heures.

Les particules obtenues sont ensuite purifiées par évaporation du milieu réactionnel. Après séchage, les particules greffées sont hydrolysées dans une solution d'acide chlorhydrique à reflux pendant 7 jours.

Un dosage acide/base des particules permet de déterminer une capacité d'échange ionique de 7 méq/g.

Une analyse RMN ¹³C des particules obtenues ne laisse plus apparaître de signal à 46 ppm, ce qui atteste de la réaction de couplage entre les particules obtenues à l'étape a) et le polymère préparé à l'étape b).

### EXEMPLE 2

Cet exemple illustre la préparation de particules de silice fonctionnalisées conformes à l'invention comprenant les étapes suivantes :
- une étape de greffage de particules de silice par du chlorométhylphényléthyltriméthoxysilane (étape a) ;
- une étape de polymérisation anionique du diéthylvinylphosphonate et du styrène (étape b) ;
- une étape de réaction du polymère obtenu à l'étape b) avec les particules de silice obtenues à l'étape a) (étape c).

Le schéma réactionnel est le suivant.
Etape a 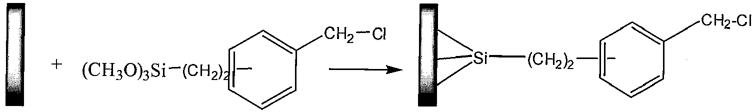
Etape b 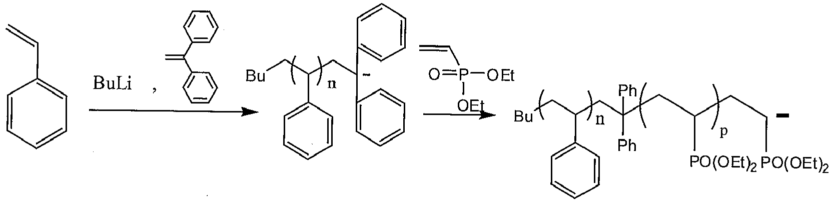
Etape c

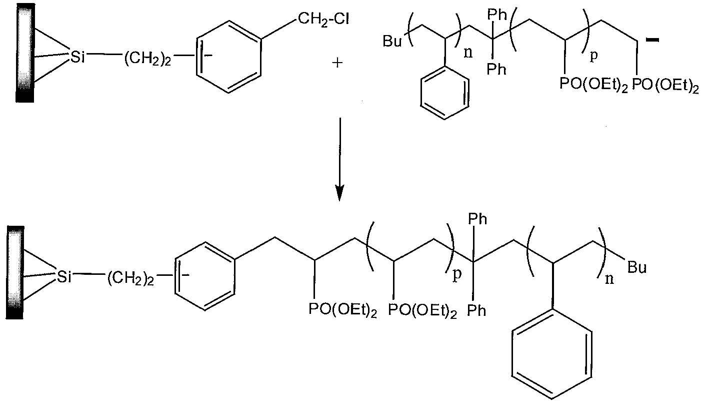

A l'issue de l'étape c, il est procédé à une hydrolyse des groupes -PO(OEt)₂ non représentée sur ce schéma.

Le trait plein vertical représente une particule de silice, le trait plein horizontal représente une charge négative, Bu représente un groupe n-butyle, Et représente un groupe éthyle, Ph représente un groupe phényle, n et p représentent le nombre de répétition des motifs pris entre parenthèses.

### Etape a-Greffage de particules de silice par du chlorométhylphényléthyltriméthoxysilane

Une suspension de 4 g de particules de silice d'un diamètre moyen de particules de 7 nm dans 300 mL de toluène est mise à reflux sous agitation magnétique et sous ultrasons pendant 1 heure. Après addition de 6 mL de chlorométhylphényléthyltriméthoxysilane, le mélange est mis à réagir pendant 4 heures à reflux. Les particules ainsi fonctionnalisées sont ensuite isolées et lavées à l'éthanol, afin d'éliminer le chlorométhylphényléthyltriméthoxysilane non greffé ainsi que les produits d'hydrolyse. La poudre obtenue est séchée sous vide à 100°C pendant 24 heures.

Une analyse RMN ¹³C des particules obtenues met en évidence un groupe chlorométhyle à 46 ppm, ce qui atteste de la présence de ce groupe sur lesdites particules, ce groupe constituant un groupe de terminaison pour une polymérisation anionique.

Une solution S1 de 500 mg de poudre ainsi préparée dispersée dans 50 mL de tétrahydrofurane (THF) est préparée. Cette solution est dégazée par 7 cycles vide/argon et maintenue sous atmosphère inerte d'argon.

### Etape b-Polymérisation anionique du diéthylvinylphosphonate et du styrène

Dans un réacteur de 250 mL, équipé d'une entrée gaz/vide, d'un thermomètre et d'un septum, préalablement séché à au moins 100°C pendant 24 heures, sont introduits 100 mL de tétrahydrofurane (THF) anhydre. La solution est mise sous agitation magnétique, refroidie à -78°C puis maintenue à cette température. Le système est dégazé par au moins 7 cycles vide/argon. Le système est maintenu sous un très léger balayage d'argon. Une quantité connue (100 *µ*L) de butyllithium à 2,4 M est introduite, afin de neutraliser les impuretés contenues dans le tétrahydrofurane (THF). 50 *µ*L (0,125 mmol) de butyllithium sont à nouveau introduits afin de servir d'amorceur de polymérisation suivi de l'ajout de 6,25 mmol (0,65 g) de styrène de manière lente de sorte à maintenir constante la température du milieu réactionnel, moyennant quoi le mélange réactionnel devient rouge/orange. Après 30 minutes, on introduit dans le mélange réactionnel 0,15 mmol de diphényléthylène, le milieu réactionnel devenant ainsi rouge sombre. Après 15 minutes, 12,5 mmol (2,05 g) de diéthylvinylphosphonate (symbolisé DEVP) sont introduites de manière lente de sorte à conserver la température constante. La coloration rouge disparaît au profit d'une légère coloration jaune. Le mélange réactionnel est conservé sous agitation à -70°C pendant 1H30.

### Etape c-Réaction entre le polymère préparé à l'étape b) et les particules préparées à l'étape a)

La solution S1 préparée à l'étape a) est injectée dans le réacteur contenant le milieu réactionnel de l'étape b) via une canule. On agite l'ensemble sous agitation pendant 12 heures.

Les particules obtenues sont ensuite purifiéés par évaporation du milieu réactionnel. Après séchage, les particules greffées sont hydrolysées dans une solution d'acide chlorhydrique à reflux pendant 7 jours.

### EXEMPLE 3

Cet exemple illustre la préparation d'un matériau composite à partir de particules préparées selon l'exemple 1 ou 2.

Pour ce faire, une suspension de 1 g de particules fonctionnalisées dans 10 g de diméthylsulfoxyde est homogénéisée sous agitation magnétique pendant 24 heures à 50°C avant d'ajouter 1 g de polyfluorure de vinylidène. Le mélange est alors homogénéisé sous agitation magnétique pendant 70 heures. Le mélange homogène est ensuite coulé sur une plaque de verre horizontale et l'épaisseur du film liquide est uniformisée par le passage d'un applicateur calibré à 500 *µ*m. Après séchage du film sous hotte à flux laminaire, le matériau composite résultant est aisément décollé de son support par immersion dans l'eau.

## Revendications

1. Procédé de fonctionnalisation de particules inorganiques par des polymères comprenant au moins un motif répétitif porteur d'au moins un groupe échangeur de protons comprenant les étapes suivantes :
a) une étape de fonctionnalisation de particules inorganiques par un agent de terminaison de polymérisation anionique comprenant au moins un groupe apte à se lier à la surface desdites particules ;
b) une étape de polymérisation anionique d'au moins un monomère porteur d'au moins un groupe précurseur d'un groupe échangeur de protons ;
c) une étape de mise en contact des particules obtenues à l'étape a) avec les polymères obtenus à l'étape b), moyennant quoi les particules obtenues sont des particules fonctionnalisées par lesdits polymères par réaction entre une extrémité réactive desdits polymères et au moins un groupe de l'agent de terminaison susmentionné ; et
d) une étape de transformation du ou des groupes précurseurs en le ou lesdits groupes échangeurs de protons.

2. Procédé de fonctionnalisation selon la revendication 1, dans lequel les particules inorganiques sont choisies parmi les particules de zéolithes, les particules de phosphates de zirconium, les particules de phosphonates de zirconium, les particules d'argiles, les particules d'oxyde.

3. Procédé de fonctionnalisation selon la revendication 2, dans lequel les particules d'oxyde sont choisies parmi les particules de silice, les particules d'alumine, les particules de zircone et les particules d'oxyde de titane.

4. Procédé de fonctionnalisation selon l'une quelconque des revendications précédentes, dans lequel le groupe de l'agent de terminaison apte à se lier à la surface des particules pour former une liaison chimique, est choisi parmi les groupes de formules suivantes :
- COOR¹ avec R¹ représentant un atome d'hydrogène, un groupe alkyle comprenant de 1 à 30 atomes de carbone ou un groupe phényle ;
- COC1 ;
- COCH₂CO-R¹ avec R¹ représentant un atome d'hydrogène, un groupe alkyle comprenant de 1 à 30 atomes de carbone ou un groupe phényle ;
- PO(OH)₂, -PO(OR²)(OH) ou -PO(OR²)(OR³) avec R² et R³, identiques ou différents, représentant un groupe alkyle comprenant de 1 à 30 atomes de carbone ou un groupe phényle ;
- CO(NHOH) ;
- M(OR⁴)ₙ₋ₓ₋₁Zₓ avec x étant un entier allant de 0 à (n-1), M étant un métal ou un métalloïde, n étant un degré d'oxydation de M, R⁴ représentant un atome d'hydrogène, un groupe alkyle comprenant de 1 à 30 atomes de carbone, un groupe phényle, un cation métallique monovalent, ou un groupe de formule N⁺R¹₄, avec R¹ représentant un atome d'hydrogène, un groupe alkyle comprenant de 1 à 30 atomes de carbone, ou un groupe phényle, et Z représente un atome d'hydrogène, un groupe alkyle comprenant de 1 à 30 atomes de carbone, un groupe phényle ou un atome d'halogène ;
- SO₃M' avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- B(OM')₂ avec M' représentant un atome d'hydrogène, un cation métallique monovalent ou un groupe de formule N⁺R¹₄ avec R¹ représentant un atome d'hydrogène, un groupe alkyle comprenant de 1 à 30 atomes de carbone ou un groupe phényle ;
- OH ;
et les combinaisons de ceux-ci.

5. Procédé de fonctionnalisation selon l'une quelconque des revendications précédentes, dans lequel le groupe de l'agent de terminaison apte à se lier à la surface des particules pour former une liaison chimique est un groupe de formule M(OR⁴)ₙ₋ₓ₋₁Zₓ avec x étant un entier allant de 0 à (n-1), M étant un métal ou un métalloïde, n étant un degré d'oxydation de M, R⁴ représentant un atome d'hydrogène, un groupe alkyle comprenant de 1 à 30 atomes de carbone, un groupe phényle, un cation métallique monovalent, ou un groupe de formule N⁺R¹₄, avec R¹ représentant un atome d'hydrogène, un groupe alkyle comprenant de 1 à 30 atomes de carbone, ou un groupe phényle, et Z représente un atome d'hydrogène, un groupe alkyle comprenant de 1 à 30 atomes de carbone, un groupe phényle ou un atome d'halogène.

6. Procédé de fonctionnalisation selon l'une quelconque des revendications précédentes, dans lequel l'agent de terminaison comprend au moins un groupe apte à réagir avec l'extrémité anionique du polymère préparé à l'étape b) pour former une liaison covalente avec celle-ci.

7. Procédé de fonctionnalisation selon l'une quelconque des revendications précédentes, dans lequel l'agent de terminaison est un composé halogénoalcoxysilane.

8. Procédé de fonctionnalisation selon l'une quelconque des revendications précédentes, dans lequel le groupe échangeur de protons est un groupe acide sulfonique -SO₃H, un groupe acide carboxylique -CO₂H ou un groupe acide phosphonique -PO₃H₂, ces groupes pouvant se présenter éventuellement sous forme d'un sel.

9. Procédé de fonctionnalisation selon l'une quelconque des revendications précédentes, dans lequel le ou les monomères utilisés dans l'étape b) répondent à la formule suivante : 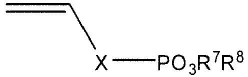 dans laquelle :
*X est une liaison simple ou un groupe benzyle ;
*R⁷ et R⁸ représentent un groupe alkyle.

10. Procédé de fonctionnalisation selon la revendication 9, dans lequel, lorsque X est une liaison simple, le ou les monomères utilisés lors de l'étape b), sont choisis parmi le vinylphosphonate de diéthyle (R⁷ et R⁸ représentant alors un groupe éthyle), le vinylphosphonate de diméthyle (R⁷ et R⁸ représentant alors un groupe méthyle), le vinylphosphonate de diisopropyle (R⁷ et R⁸ représentant alors un groupe diisopropyle).

11. Procédé de fonctionnalisation selon l'une quelconque des revendications précédentes, dans lequel l'étape b) se déroule, outre la présence de monomères tels que définis selon l'une quelconque des revendications précédentes, en présence de monomères différents de ceux-ci, ces monomères étant choisis parmi les monomères styréniques et les monomères méthacrylates.

12. Procédé selon l'une quelconque des revendications précédentes, dans lequel :
- les particules sont des particules de silice ;
- l'agent de terminaison est un composé halogénoalcoxysilane, tel que le chlorométhylphényléthyltriméthoxysilane ;
- le monomère comportant un groupe précurseur d'un groupe échangeur de protons utilisé dans l'étape b) est le diéthylvinylphosphonate, ce monomère étant utilisé, éventuellement, en combinaison avec au moins un monomère styrénique, tel que le styrène.

## Patentansprüche

1. Verfahren zum Funktionalisieren von anorganischen Partikeln durch Polymere, die wenigstens ein sich wiederholendes Motiv umfassen, das Träger wenigstens einer Protonentauschgruppe ist, umfassend die folgenden Schritte:
a) einen Schritt des Funktionalisierens von anorganischen Partikeln durch ein anionisches Polymerisationsbeendigungsagens, umfassend wenigstens eine Gruppe, die dazu ausgelegt ist, sich an die Oberfläche der Partikel zu binden;
b) einen Schritt der anionischen Polymerisation wenigstens eines Monomers, das Träger wenigstens einer Präkursorgruppe einer Protonentauschgruppe ist;
c) einen Schritt des Inkontaktbringens der im Schritt a) erhaltenen Partikel mit den im Schritt b) erhaltenen Polymeren, wodurch die erhaltenen Partikel Partikel sind, die durch die Polymere durch Reaktion zwischen einem reaktiven Ende der Polymere und wenigstens einer Gruppe des genannten Beendigungsagens funktionalisiert werden; und
d) einen Schritt der Transformation der Präkursorgruppe(n) in die Protonentauschgruppe(n).

2. Verfahren zum Funktionalisieren nach Anspruch 1, bei dem die anorganischen Partikel ausgewählt sind aus den Zeolithpartikeln, den Zirkonphosphatpartikeln, den Zirkonphosphonatpartikeln, den Argilpartikeln, den Oxidpartikeln.

3. Verfahren zum Funktionalisieren nach Anspruch 2, bei dem die Oxidpartikel ausgewählt sind aus den Siliziumoxidpartikeln, den Aluminiumoxidpartikeln, den Zirkonoxidpartikeln und den Titanoxidpartikeln.

4. Verfahren zum Funktionalisieren nach einem der vorhergehenden Ansprüche, bei dem die Gruppe des Beendigungsagens, die dazu ausgelegt ist, sich an die Oberfläche der Partikel zu binden, um eine chemische Bindung zu bilden, ausgewählt ist aus den Gruppen mit den nachfolgenden Formeln:
- COOR¹, wobei R¹ ein Wasserstoffatom, eine Alkylgruppe mit 1 bis 30 Kohlenstoffatomen oder eine Phenylgruppe darstellt;
- COCl;
- COCH₂CO-R¹, wobei R¹ ein Wasserstoffatom, eine Alkylgruppe mit 1 bis 30 Kohlenstoffatomen oder eine Phenylgruppe darstellt;
- PO (OH)₂, -PO (OR²) (OH) oder -PO (OR²) (OR³), wobei R² und R³, die identisch oder unterschiedlich sind, eine Alkylgruppe mit 1 bis 30 Kohlenstoffatomen oder eine Phenylgruppe darstellen;
- CO(NHOH);
- M (OR⁴)ₙ₋ₓ₋₁Zₓ, wobei x eine ganze Zahl zwischen Null und (n-1) ist, M ein Metall oder ein Metalloid ist, n ein Oxidationsgrad von M ist, R⁴ ein Wasserstoffatom, eine Alkylgruppe mit 1 bis 30 Kohlenstoffatomen, eine Phenylgruppe, ein monovalentes metallisches Kation oder eine Gruppe der Formel N⁺R¹₄ darstellt, wobei R¹ ein Wasserstoffatom, eine Alkylgruppe mit 1 bis 30 Kohlenstoffatomen oder eine Phenylgruppe darstellt, und wobei Z ein Wasserstoffatom, eine Alkylgruppe mit 1 bis 30 Kohlenstoffatomen, eine Phenylgruppe oder ein Halogenatom darstellt;
- SO₃M', wobei M' ein Wasserstoffatom, ein monovalentes metallisches Kation oder eine Gruppe der Formel N⁺R¹₄ darstellt, wobei R¹ ein Wasserstoffatom, eine Alkylgruppe mit 1 bis 30 Kohlenstoffatomen oder eine Phenylgruppe darstellt;
- B (OM')₂, wobei M' ein Wasserstoffatom, ein monovalentes metallisches Kation oder eine Gruppe der Formel N⁺R¹₄ darstellt, wobei R¹ ein Wasserstoffatom, eine Alkylgruppe mit 1 bis 30 Kohlenstoffatomen oder eine Phenylgruppe darstellt;
- OH;
und deren Kombinationen.

5. Verfahren zum Funktionalisieren nach einem der vorhergehenden Ansprüche, bei dem die Gruppe des Beendigungsagens, die dazu ausgelegt ist, sich an die Oberfläche der Partikel zu binden, um eine chemische Bindung zu bilden, eine Gruppe der Formel M (OR⁴)ₙ₋ₓ₋₁Zₓ ist, wobei x eine ganze Zahl zwischen Null und (n-1) ist, M ein Metall oder ein Metalloid ist, n ein Oxidationsgrad von M ist, R⁴ ein Wasserstoffatom, eine Alkylgruppe mit 1 bis 30 Kohlenstoffatomen, eine Phenylgruppe, ein monovalentes metallisches Kation oder eine Gruppe der Formel N⁺R¹₄ ist, wobei R¹ ein Wasserstoffatom, eine Alkylgruppe mit 1 bis 30 Kohlenstoffatomen oder eine Phenylgruppe darstellt, und wobei Z ein Wasserstoffatom, eine Alkylgruppe mit 1 bis 30 Kohlenstoffatomen, eine Phenylgruppe oder ein Halogenatom darstellt.

6. Verfahren zum Funktionalisieren nach einem der vorhergehenden Ansprüche, bei dem das Beendigungsagens wenigstens eine Gruppe umfasst, die dazu ausgelegt ist, mit dem anionischen Ende des im Schritt b) präparierten Polymers zu reagieren, um eine kovalente Bindung hiermit zu bilden.

7. Verfahren zum Funktionalisieren nach einem der vorhergehenden Ansprüche, bei dem das Beendigungsagens eine Halogenalcoxysilan-Verbindung ist.

8. Verfahren zum Funktionalisieren nach einem der vorhergehenden Ansprüche, bei dem die Protonentauschgruppe eine Schwefelsäuregruppe -SO₃H, eine Karboxylsäuregruppe -CO₂H oder eine Phosphonsäuregruppe -PO₃H₂ ist, wobei diese Gruppen gegebenenfalls in Form eines Salzes vorliegen können.

9. Verfahren zum Funktionalisieren nach einem der vorhergehenden Ansprüche, bei dem das oder die im Schritt b) verwendete(n) Monomer(e) der folgenden Formel genügt/genügen: 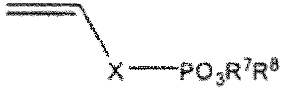 wobei:
*X eine einfache Bindung oder eine Benzylgruppe ist;
* R⁷ und R⁸ eine Alkylgruppe darstellen.

10. Verfahren zum Funktionalisieren nach Anspruch 9, bei dem dann, wenn X eine einfache Bindung ist, das oder die im Schritt b) verwendete(n) Momoner(e) ausgewählt ist/sind aus Diethyl-Vinylphosphonat (R⁷ und R⁸ stellen dann eine Ethylgruppe dar), Dimethyl-Vinylphosphonat (R⁷ und R⁸ stellen dann eine Methylgruppe dar), Diisopropyl-Vinylphosphonat (R⁷ und R⁸ stellen dann eine Diisopropylgruppe dar).

11. Verfahren zum Funktionalisieren nach einem der vorhergehenden Ansprüche, bei dem der Schritt b) abgesehen von der Anwesenheit von Monomeren wie in einem der vorhergehenden Ansprüche definiert in Anwesenheit von Monomeren ausgeführt wird, die hiervon verschieden sind, wobei diese Monomere aus den StyrolMonomeren und den Methacrylat-Monomeren ausgewählt sind.

12. Verfahren nach einem der vorhergehenden Ansprüche, bei dem:
- die Partikel Siliziumoxid-Partikel sind;
- das Beendigungsagens eine Halogenalcoxysilan-Verbindung ist, wie zum Beispiel Chlormethylphenylethyltrimethoxysilan;
- das Monomer, das eine Präkursorgruppe einer Protonentauschgruppe umfasst, das im Schritt b) verwendet wird, Diethylvinylphosphonat ist, wobei dieses Monomer gegebenenfalls in Kombination mit wenigstens einem Styrol-Monomer wie zum Beispiel Styrol verwendet wird.

## Claims

1. A method for functionalization of inorganic particles by polymers comprising at least one recurrent unit bearing at least one proton exchange group comprising the following steps:
a) a step for functionalization of inorganic particles by an anionic polymerization termination agent comprising at least one group capable of being bound to the surface of said particles;
b) a step for anionic polymerization of at least one monomer bearing at least one precursor group of a proton exchange group;
c) a step for putting the particles obtained in step a) in contact with the polymers obtained in step b), in return for which the obtained particles are functionalized particles by said polymers by reaction between a reactive end of said polymers and at least one group of the aforementioned termination agent; and
d) a step for transforming the precursor group(s) into said proton exchange group(s).

2. The functionalization method according to claim 1, wherein the inorganic particles are selected from zeolite particles, zirconium phosphate particles, zirconium phosphonate particles, clay particles, oxide particles.

3. The functionalization method according to claim 2, wherein the oxide particles are selected from silica particles, alumina particles, zirconia particles and titanium oxide particles.

4. The functionalization method according to any of the preceding claims, wherein the group of the termination agent capable of being bound to the surface of the particles in order to form a chemical bond, is selected from the groups of the following formulae:
- COOR¹ with R¹ representing a hydrogen atom, an alkyl group comprising from 1 to 30 carbon atoms or a phenyl group;
- COCl;
- COCH₂CO-R¹ with R¹ representing a hydrogen atom, an alkyl group comprising from 1 to 30 carbon atoms or a phenyl group;
- PO(OH)₂, -PO(OR²)(OH) or -PO(OR²)(OR³) with R² and R³, either identical or different, representing an alkyl group comprising from 1 to 30 carbon atoms or a phenyl group;
- CO(NHOH) ;
- M(OR⁴)ₙ₋ₓ₋₁Zₓ with x being an integer ranging from 0 to (n-1), M being a metal or a metalloid, n being a degree of oxidation of M, R⁴ representing a hydrogen atom, an alkyl group comprising from 1 to 30 carbon atoms, a phenyl group, a monovalent metal cation, or a group of formula N⁺R¹₄, with R¹ representing a hydrogen atom, an alkyl group comprising from 1 to 30 carbon atoms, or a phenyl group, and Z represents a hydrogen atom, an alkyl group comprising from 1 to 30 carbon atoms, a phenyl group or a halogen atom;
- SO₃M' with M' representing a hydrogen atom, a monovalent metal cation or a group of formula N⁺R¹₄ with R¹ representing a hydrogen atom, an alkyl group comprising from 1 to 30 carbon atoms or a phenyl group;
- B(OM')₂ with M' representing a hydrogen atom, a monovalent metal cation or a group of formula N⁺R¹₄ with R¹ representing a hydrogen atom, an alkyl group comprising from 1 to 30 carbon atoms or a phenyl group;
- OH;
and combinations thereof.

5. The functionalization method according to any of the preceding claims, wherein the group of the termination agent capable of being bound to the surface of the particles in order to form a chemical bond is a group of formula M(OR⁴)ₙ₋ₓ₋₁Zₓ with x being an integer ranging from 0 to (n-1), M being a metal or a metalloid, n being a degree of oxidation of M, R⁴ representing a hydrogen atom, an alkyl group comprising from 1 to 30 carbon atoms, a phenyl group, a monovalent metal cation, or a group of formula N⁺R¹₄, with R¹ representing a hydrogen atom, an alkyl group comprising from 1 to 30 carbon atoms, or a phenyl group, and Z represents a hydrogen atom, an alkyl group comprising from 1 to 30 carbon atoms, a phenyl group or a halogen atom.

6. The functionalization method according to any of the preceding claims, wherein the termination agent comprises at least one group capable of reacting with the anionic end of the polymer prepared in step b) in order to form a covalent bond with the latter.

7. The functionalization method according to any of the preceding claims, wherein the termination agent is a halogenoalkoxysilane compound.

8. The functionalization method according to any of the preceding claims, wherein the proton exchange group is a sulfonic acid group -SO₃H, a carboxylic acid group -CO₂H or a phosphonic acid group -PO₃H₂, these groups may optionally appear as a salt.

9. The functionalization method according to any of the preceding claims, wherein the monomer(s) used in step b) fit the following formula: 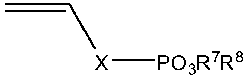 wherein:
*X is a simple bond or a benzyl group;
*R⁷ and R⁸ represent an alkyl group.

10. The functionalization method according to claim 9, wherein, when X is a simple bond, the monomer(s) used during step b) are selected from diethyl vinylphosphonate (R⁷ and R⁸ then representing an ethyl group), dimethyl vinylphosphonate (R⁷ and R⁸ then representing a methyl group), diisopropyl vinylphosphonate (R⁷ and R⁸ then representing a diisopropyl group).

11. The functionalization method according to any of the preceding claims, wherein step b) takes place, in addition to the presence of monomers as defined according to any of the preceding claims, in the presence of monomer(s) different from the latter, these monomers being selected from styrenic monomers and methacrylate monomers.

12. The method according to any of the preceding claims, wherein:
- the particles are silica particles;
- the termination agent is a halogenoalkoxysilane compound, such as chloromethyl-phenylethyltrimethoxysilane;
- the monomer including a precursor group of a proton exchange group used in step b) is diethyl vinylphosphonate, this monomer being optionally used in combination with at least one styrenic monomer, such as styrene.
